(19) Europäisches Patentamt
European Patent Office
Office européen des brevets

(11) EP 4 790 764 A1

(12) EUROPEAN PATENT APPLICATION

(43) Date of publication:
**12.08.2026 Bulletin 2026/33**

(21) Application number: **26153271.7**

(22) Date of filing: **21.01.2026**

(51) International Patent Classification (IPC):
***H01M 4/36*** *(2006.01)* ***H01M 4/505*** *(2010.01)*
***H01M 4/525*** *(2010.01)* ***H01M 4/58*** *(2010.01)*
***H01M 10/052*** *(2010.01)*

(52) Cooperative Patent Classification (CPC):
**H01M 10/052; H01M 4/364; H01M 4/366; H01M 4/505; H01M 4/525; H01M 4/5825**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.02.2025 KR 20250015184**

(71) Applicant: **SAMSUNG SDI CO., LTD.**
**Yongin-si, Gyeonggi-do 17084 (KR)**

(72) Inventor: **Doo, Sungwook**
**17084 Yongin-si, Gyeonggi-do (KR)**

(74) Representative: **Michalski Hüttermann & Partner mbB**
**Kaistraße 16A**
**40221 Düsseldorf (DE)**

(54) **POSITIVE ELECTRODE FOR RECHARGEABLE LITHIUM BATTERY, AND RECHARGEABLE LITHIUM BATTERY INCLUDING THE SAME**

(57) The present disclosure relates to a positive electrode for a rechargeable lithium battery and a rechargeable lithium battery including the positive electrode. For example, the present disclosure relates to a positive electrode for a rechargeable lithium battery and a rechargeable lithium battery including the positive electrode. The electrode includes a positive electrode current collector, a first positive electrode active material layer on the positive electrode current collector, and a second positive electrode active material layer on the first positive electrode active material layer. The first positive electrode active material layer includes a first particle, wherein the second positive electrode active material layer includes a second particle, and a third particle. A ratio of an amount of the third particle relative to a total weight of the first, second and third particles is from ≥ 10 wt% to ≤ 30 wt%.

FIG. 2

100
60
30
30
40
10
20
50

EP 4 790 764 A1

## Description

CROSS-REFERENCE TO RELATED APPLICATION

This European patent application claims priority to Korean Patent Application No. 10-2025-0015184 filed on February 6, 2025 in the Korean Intellectual Property Office.

BACKGROUND

The present disclosure relates to a positive electrode for a rechargeable lithium battery and a rechargeable lithium battery including the positive electrode, and for example, to a positive electrode having a double layer structure and a rechargeable lithium battery including the positive electrode.

With increasing presence of battery-powered electronic devices such as, e.g., mobile phones, notebook computers, electric vehicles, e.g., the demand for rechargeable batteries with high energy density and large capacity is increasing. In response, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

An object of the present disclosure is to provide a positive electrode for a rechargeable lithium battery having desired or improved capacity and desired or improved lifespan characteristics.

A positive electrode for a rechargeable lithium battery according to an example embodiment of the present disclosure includes a positive electrode current collector, a first positive electrode active material layer on the positive electrode current collector, and a second positive electrode active material layer on the first positive electrode active material layer. The first positive electrode active material layer includes a first particle represented by the following Chemical Formula 1, wherein the second positive electrode active material layer includes a second particle represented by the following Chemical Formula 2, and a third particle represented by the following Chemical Formula 3. An amount of the third particle relative to a total weight of the first, second and third particles is from ≥ 10 wt% to ≤ 30 wt%.

Chemical Formula 1: $Li_{a1}Mn_{z1}Fe_{x1}B1_{y1}PO_{4-b1}$

wherein $0.8 \leq a1 \leq 1.2$, $0 \leq z1 \leq 0.9$, $0.1 \leq x1 \leq 1$, $0 \leq y1 \leq 0.05$, $0 \leq b1 \leq 0.05$, and $x1+y1+z1=1$,
wherein B1 is or includes at least one of Ti, Mg, V, Al, or a combination thereof.

Chemical Formula 2: $Li_{a2}Mn_{z2}Fe_{x2}B2_{y2}PO_{4-b2}$

wherein $0.8 \leq a2 \leq 1.2$, $0.5 \leq z2 \leq 0.9$, $0.1 \leq x2 \leq 0.5$, $0 \leq y2 \leq 0.05$, $0 \leq b2 \leq 0.05$, and $x2+y2+z2=1$,
wherein B2 is or includes at least one of Ti, Mg, V, Al, or a combination thereof.

Chemical Formula 3: $Li_{a3}Ni_{x3}Co_{y3}Ma_{z3}B3_{w3}O_{2-b3}$

In the Chemical Formula 3, $0.8 \leq a3 \leq 1.2$, $0.8 \leq x3<1$, $0<y3 \leq 0.2$, $0<z3 \leq 0.2$ $0 \leq w3 \leq 0.1$, $0 \leq b3 \leq 0.05$, and $0.9 \leq x3+y3+z3+w3 \leq 1.1$, and
wherein Ma is or includes at least one of Al, Mn, or a combination thereof, and B3 is or includes at least one of Mg, Ti, V, Zr, Mo, Nb, or a combination thereof.

A positive electrode for a rechargeable lithium battery according to an example embodiment of the present disclosure includes a positive electrode current collector, a first positive electrode active material layer on the positive electrode current collector, and a second positive electrode active material layer on the first positive electrode active material layer. The first positive electrode active material layer includes a first particle represented by the following Chemical Formula 1. The second positive electrode active material layer includes a second particle represented by the following Chemical Formula 2, and a third particle represented by the following Chemical Formula 3. The first positive electrode active material layer is substantially free of the third particle. In the second positive electrode active material

layer, a weight ratio of the second particle to the third particle is from ≥ 1:1 to ≤ 1:3.

A rechargeable lithium battery according to an example embodiment of the present disclosure includes a positive electrode as discussed above, a negative electrode, and an electrolyte between the positive electrode and the negative electrode.

BRIEF DESCRIPTION OF DRAWINGS

FIG. 1 illustrates a simplified conceptual diagram showing a rechargeable lithium battery according to one or more example embodiments of the present disclosure;

FIGS. 2-5 illustrates schematic diagram each showing a rechargeable lithium battery according to one or more example embodiments, FIG. 2 illustrates a cylindrical battery, FIG. 3 illustrates a prismatic battery, and FIGS. 4 and 5 illustrate pouch-type (kind) batteries;

FIG. 6 is a cross-sectional view of a positive electrode for a rechargeable lithium battery according to an example embodiment of the present disclosure.

FIG. 7 is an enlarged view of a first positive electrode active material layer of a positive electrode for a rechargeable lithium battery according to an example embodiment of the present disclosure.

FIG. 8 is an enlarged view of a second positive electrode active material layer of a positive electrode for a rechargeable lithium battery according to an example embodiment of the present disclosure.

DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components. In this description, the phrase "combination thereof" may refer to a mixture, a stack, a composite, a copolymer, an alloy, a blend, or a reaction product.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

In this description, the phrase "substantially free of" means that the relevant component is not intentionally included, or is present only in a trace amount at an impurity level that does not affect the intended properties or functions of the composition.

Unless otherwise specifically defined, the term "particle diameter" refers to an average particle diameter. The particle diameter may represent the median particle size (D50), which corresponds to the diameter of particles at about 50 vol% in a cumulative particle size distribution. The average particle diameter (D50) can be measured using known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a about 50% cumulative particle size distribution.

When the terms "about" or "substantially" are used in this specification in connection with a numerical value, it is intended that the associated numerical value include a tolerance of ±10% around the stated numerical value. of 0.1%.

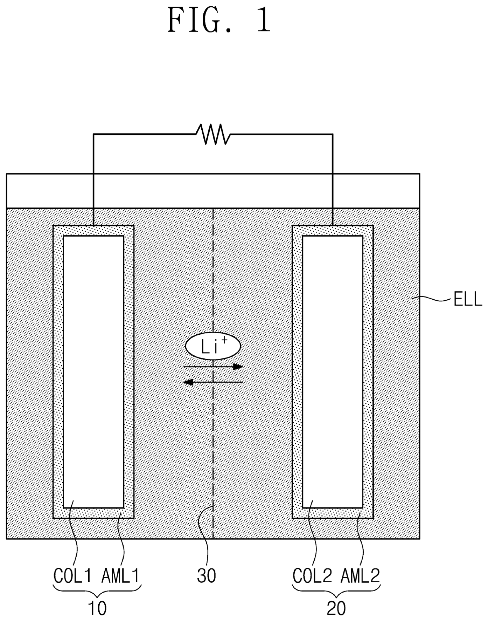

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator

30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

Positive Electrode 10

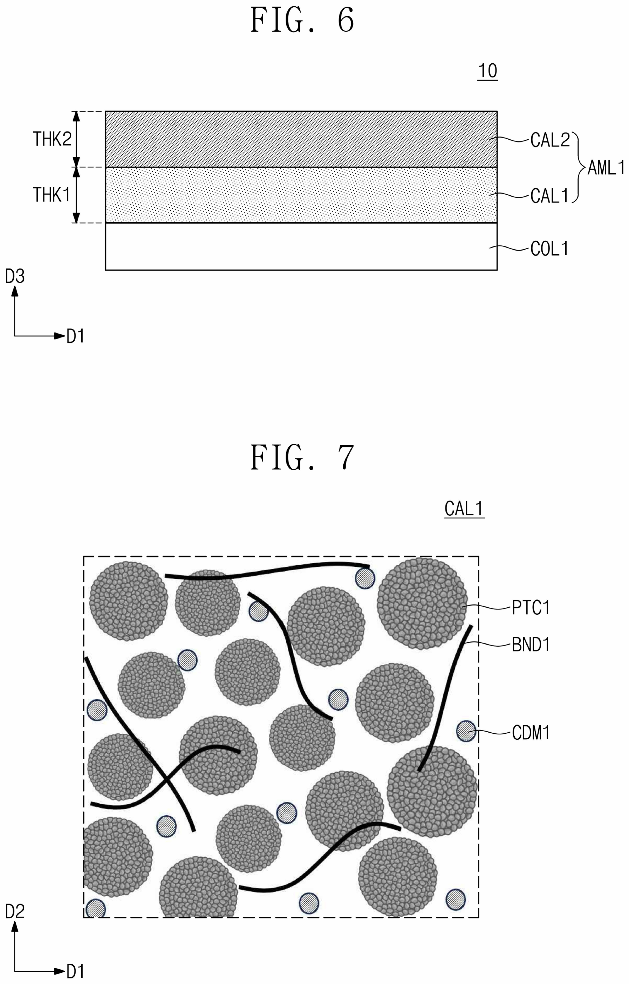

The positive electrode 10 for a rechargeable lithium battery may include a current collector COL1 and a positive electrode active material layer AML1 on the current collector. The positive electrode active material layer AML1 may include a positive electrode active material, and may further include a binder and/or a conductive material (e.g., an electrically conductive material). The positive electrode active material layer AML1 according to one or more example embodiments of the present disclosure is described in more detail with reference to FIGS. 6 to 8. Aluminum (Al) may be used for the current collector COL1, but example embodiments of the present disclosure are not limited thereto.

Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to ≤ 99 wt% of the negative electrode active material, about 0.5 wt% to ≤ 5 wt% of the binder, and about 0 wt% to ≤ 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber, a conductive polymer such as a polyphenylene derivative, or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x \leq 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC),

ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to ≤ 1:9.

The lithium salt dissolved in the organic solvent is configured to supply lithium ions in a battery, to enable an operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

Rechargeable Lithium Battery

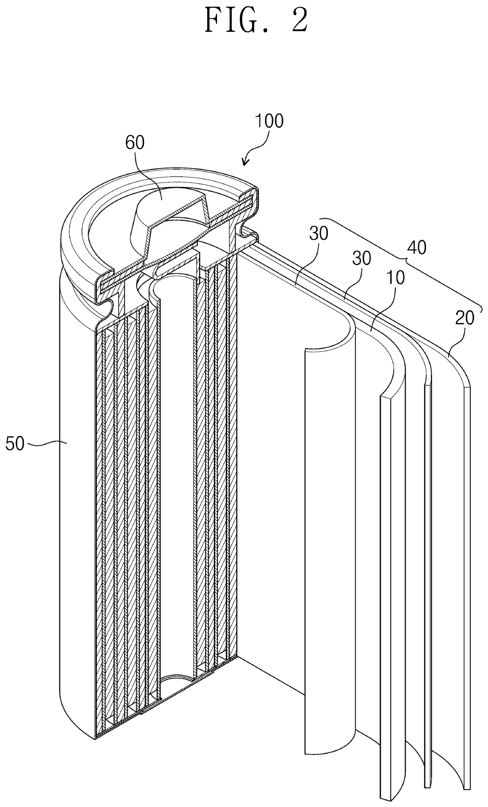

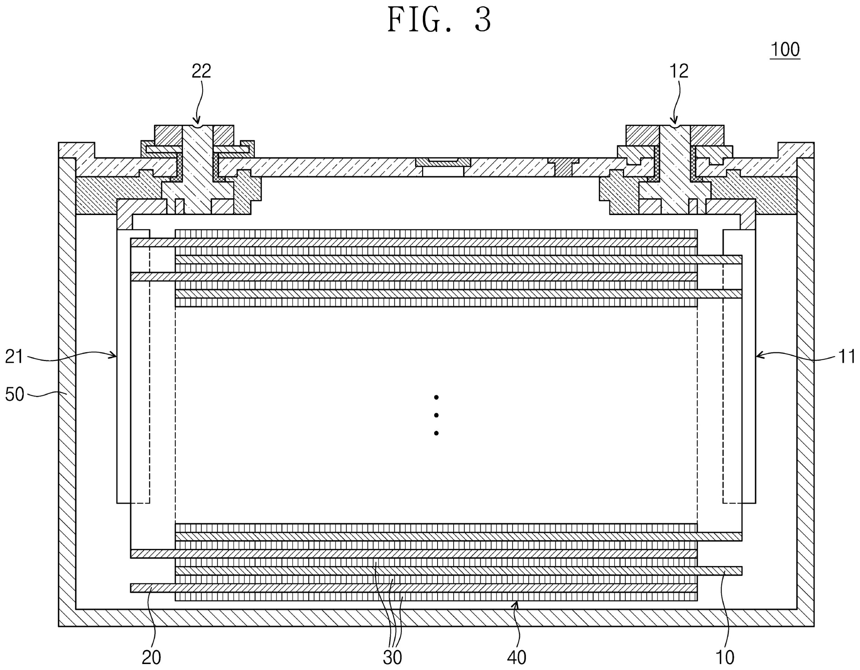

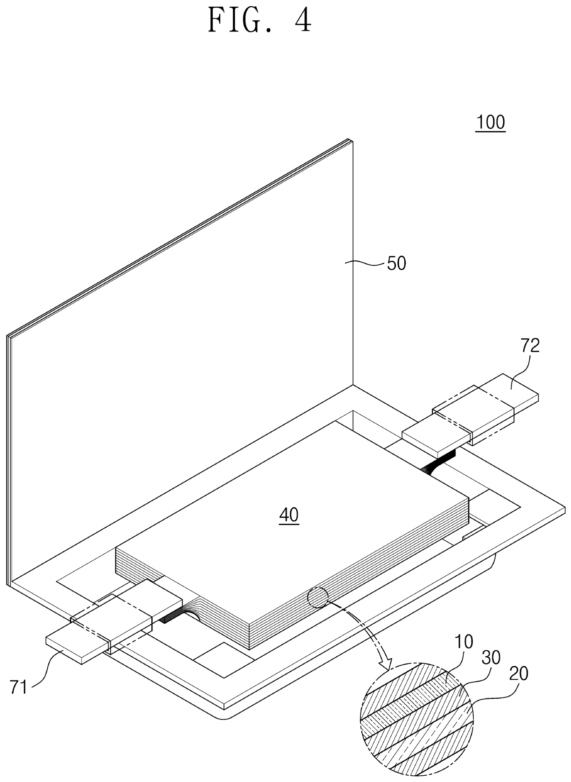

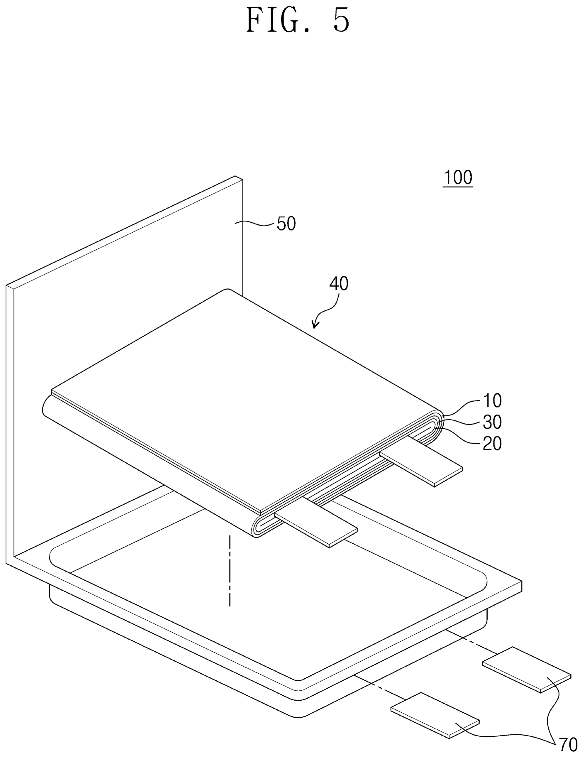

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is a cross-sectional view of a positive electrode 10 for a rechargeable lithium battery according to example embodiments of the present disclosure.

Referring to FIG. 6, the positive electrode 10 for a rechargeable lithium battery may include a positive electrode current collector (COL1, see FIG. 1) and a positive electrode active material layer (AML1, see FIG. 1).

The positive electrode active material layer AML1 may include a first positive electrode active material layer CAL1 and a second positive electrode active material layer CAL2 stacked on the first positive electrode active material layer CAL1. Hereinafter, each of the first positive electrode active material layer CAL1 and the second positive electrode active material layer CAL2 is described in more detail.

**First Positive Electrode Active Material Layer CAL1**

FIG. 7 is an enlarged view of the first positive electrode active material layer CAL1 of the positive electrode 10 for a rechargeable lithium battery according to an example embodiment of the present disclosure.

Referring to FIG. 7, the first positive electrode active material layer CAL1 may include a first particle PTC1, a first binder BND1, and a first conductive material CDM1. The first positive electrode active material layer CAL1 may further include an additive that may constitute a sacrificial positive electrode.

The first particle PTC1 may include an olivine-based lithium compound represented by the following Chemical Formula 1 below.

Chemical Formula 1: $Li_{a1}Mn_{z1}Fe_{x1}B1_{y1}PO_{4-b1}$.

In the Chemical Formula 1, where $0.8 \leq a1 \leq 1.2$, $0 \leq z1 \leq 0.9$, $0.1 \leq x1 \leq 1$, $0 \leq y1 \leq 0.05$, $0 \leq b1 \leq 0.05$, and $x1+y1+z1=1$, and B1 may be or include at least one of Ti, Mg, V, Al or a combination thereof. B1 may be or include a dopant doped into the first particle PTC1. For example, B1 may include Ti.

In an example embodiment, z1 may be from $\geq 0$ to $\leq 0.1$, and x1 may be from $\geq 0.9$ to $\leq 1$. In the above Chemical Formula 1, when z1 is equal to 0, the first particle PTC1 may not include Mn. The first particle PTC1 may be or include a lithium-iron-phosphate (LFP)-based positive electrode active material that does not contain Mn, or contains only a trace amount of Mn at an impurity level. The first particle PTC1 may have an operating voltage of 4.0 V or less. For example, the operating voltage of the first particle PTC1 may be in a range of 3.8 V or less or 3.5 V or less.

In an example embodiment, the first particle PTC1 may include a first coating layer on the surface thereof. The first coating layer may cover the entire surface of the first particle PTC1, or may cover a part of the surface of the first particle PTC1. For example, the first coating layer may include carbon and/or a carbon-containing compound. The structural stability and the electrical conductivity of the first particle PTC1 may be improved by the first coating layer.

The first coating layer may further include at least one of a titanium-containing compound, a magnesium-containing compound, and a vanadium-containing compound. The metal-containing compound such as a titanium-containing compound, a magnesium-containing compound, and a vanadium-containing compound may be, for example, at least one of a metal oxide, a metal hydroxide, a metal carbonate, a composite thereof, or a mixture thereof. The metal-containing compound may further contain other metal or non-metal elements. For example, the metal-containing compound may further contain lithium.

Referring again to FIG. 7, the first particle PTC1 may have a polycrystalline form and may include a secondary particle in which at least two first primary particles are aggregated (e.g., agglomerated). In other words, the first particle PTC1 may include a plurality of first primary particles that are aggregated (e.g., agglomerated) with each other. The first particle PTC1 may have a substantially spherical shape or a substantially elliptical shape.

In an example embodiment, the first particle PTC1 may further include a grain boundary coating layer on the surface of each of the first primary particles. The grain boundary coating layer may be present inside the first particle PTC1. The grain boundary coating layer may be formed by coating along the boundaries between the first primary particles inside the first particle PTC1. In other words, the grain boundary coating layer may refer to a material coated on the grain boundary inside the first particle PTC1. The grain boundary coating layer may include carbon and/or a carbon containing compound. The grain boundary coating layer may further include at least one of a titanium-containing compound, a magnesium-containing compound, and a vanadium-containing compound.

The inside of the first particle PTC1 described above may refer to the entire inside of the first particle PTC1 except for the surface of the first particle. For example, the inside of the first particle PTC1 may refer to an entire inner region starting from a depth of about 10 nm from the outer surface of the first particle PTC1 and extending inward. In another example, the inside of the first particle PTC1 may refer to a region ranging from a depth of about 10 nm to $\leq 2$ μm from the outer surface of the first particle PTC1.

The first particle PTC1 may further include a grain boundary coating portion, whereby structural stability may be enhanced and a substantially uniform coating layer may be formed on the surface of the first particle PTC1. In addition, the first particle PTC1 may further include the grain boundary coating portion, whereby the electrical conductivity of the first particle PTC1 may be further improved.

The first particle PTC1 may further include carbon derived from the first coating layer and/or the grain boundary coating layer described above. The carbon element amount in the first particle PTC1 may be from $\geq 0.5\%$ by weight to $\leq 10\%$ by weight, from $\geq 1\%$ by weight to $\leq 3\%$ by weight, or from $\geq 1.5\%$ by weight to $\leq 2.5\%$ by weight.

A method for measuring the carbon amount according to the example embodiments of the present disclosure may include performing scanning electron microscope-energy dispersive X-ray spectroscopy (SEM-EDS) on the surface of the particles and conducting a quantitative analysis. As a method for measuring the carbon amount, in addition to SEM-EDS, inductively coupled plasma-mass spectrometry (ICP-MS), inductively coupled Plasma Optical Emission Spectroscopy (ICP-OES), or the like may be used.

In the case where the first particle PTC1 is a secondary particle, the average particle diameter of the first particle PTC1 may be from $\geq 2$ μm to $\leq 15$ μm, from $\geq 3$ μm to $\leq 10$ μm, or from $\geq 3$ μm to $\leq 7$ μm. For example, the average particle diameter of the first particle PTC1 may be equal to $\leq 5$ μm. In an example embodiment, the average particle diameter may be measured by a particle size analyzer (e.g., laser diffraction analysis). The average particle diameter may refer to the diameter (D50) of particles at which the cumulative volume in the particle size distribution reaches about 50% by volume.

The average size of the first primary particles of the first particle PTC1 may be from $\geq 10$ nm to $\leq 400$ nm, from $\geq 20$ nm to $\leq 300$ nm, from $\geq 50$ nm to $\leq 200$ nm, or from $\geq 100$ nm to $\leq 200$ nm. In an example embodiment, the average size of the first primary particles may refer to an average value of diameters measured by arbitrarily selecting about 30 first primary particles in an electron micrograph of the positive electrode active material. The particle diameters of the first primary particles may be uniform.

When the average particle diameter of the first particle PTC1 and the average size of the first primary particles satisfy the range described above and the size of the first primary particles is uniform, the charge-discharge capacity and

the low-temperature capacity of the rechargeable lithium battery including the same may be improved.

The first particle PTC1 may have a spherical shape in which nano-sized first primary particles are aggregated (e.g., agglomerated). The first particle PTC1 may exhibit the following characteristics as a result of the first primary particles being closely aggregated (e.g., agglomerated). The first particle PTC1 may have a spherical shape or an elliptical shape. The average particle diameter D50 of the first particle PTC1 may be from ≥ 2 μm to ≤ 15 μm. The porosity of the first particle PTC1 may be from ≥ 20% to ≤ 40%. The Span value obtained by analyzing the first particle PTC1 with a particle size analyzer may be from ≥ 0.3 to ≤ 0.75.

Although not illustrated, according to another example embodiment of the present disclosure, the first particle PTC1 may have a single particle form.

In the present specification, a single particle may refer to a single particle having no grain boundary therein. Morphologically, a single particle may refer to a single, monolithic, single-body, or non-aggregated (e.g., non-agglomerated) particle that exists as an independent phase in which the particles are not aggregated (e.g., agglomerated) with each other. For example, the single particle may be single crystal. Alternatively, the single particle may be or include a particle containing several crystals. The single particle may be in isolated form alone. Alternatively, the single particle may be in a form in which 2 to 100 single particles are attached to each other.

When the first particle has a single particle form, the first particle may include at least one first primary particle. When the first particle has a single particle form, the average particle diameter of the first particle may be from ≥ 500 nm to ≤ 2.5 μm, or about 1 μm. The minimum particle diameter of the first particle, i.e., the size of the first primary particles, may be from ≥ 100 nm to ≤ 500 nm, or from ≥ 200 nm to ≤ 300 nm. When the first particle PTC1 has a single particle form, the size of the first primary particles may be larger than when the first particle has a secondary particle form.

In an example embodiment, the average particle diameter may be measured by a particle size analyzer. The average particle diameter may refer to the diameter (D50) of particles at which the cumulative volume in the particle size distribution reaches about 50% by volume. In an example embodiment, the minimum particle diameter, i.e., the size of the first primary particles, may refer to a diameter measured by arbitrarily selecting about 30 first primary particles in an electron micrograph of the first particle PTC1.

The first binder BND1 may bind the first particle PTC1 and the first conductive material CDM1 to each other. In addition, the first binder BND1 may stably fix the first positive electrode active material layer CAL1 to the current collector COL1. As an example, the first binder BND1 may include at least one of polyvinyl alcohol, carboxymethylcellulose, hydroxypropyl cellulose, diacetyl cellulose, polyvinyl chloride, carboxylated polyvinylchloride, polyvinyl fluoride, polymers including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth) acrylic resin, polyester resin, and nylon, but is not limited thereto.

The first conductive material CDM1 may improve the conductivity of the first positive electrode active material layer CAL1. Any conductive material that does not cause a chemical change in the first positive electrode active material layer CAL1 may be used as the first conductive material CDM1 without limitation. For example, the first conductive material CDM1 may include a carbon-based material such as at least one of natural graphite, artificial graphite, carbon black, acetylene black, Ketjen black, carbon fiber, carbon nanofiber, or carbon nanotube; a metal-based material containing at least one of copper, nickel, aluminum, silver, or the like in the form of metal powder or metal fiber; a conductive polymer such as a polyphenylene derivative; or a mixture thereof.

## Second Positive Electrode Active Material Layer CAL2

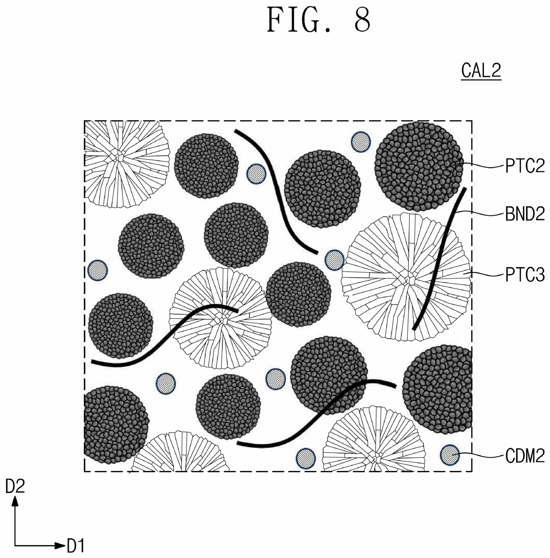

FIG. 8 is an enlarged view of the second positive electrode active material layer CAL2 of the positive electrode 10 for a rechargeable lithium battery according to an example embodiment of the present disclosure.

Referring to FIG. 8, the second positive electrode active material layer CAL2 may include a second particle PTC2, a third particle PTC3, a second binder BND2, and a second conductive material CDM2. The second positive electrode active material layer CAL2 may further include an additive that may constitute a sacrificial positive electrode.

The second particle PTC2 may include an olivine-based lithium compound represented by the following Chemical Formula 2.

Chemical Formula 2: $Li_{a2}Mn_{z2}Fe_{x2}B2_{y2}PO_{4-b2}$.

In the Chemical Formula 2, where $0.8 \leq a2 \leq 1.2$, $0.5 \leq z2 \leq 0.9$, $0.1 \leq x2 \leq 0.5$, $0 \leq y2 \leq 0.05$, $0 \leq b2 \leq 0.05$, and $x2+y2+z2=1$, and B2 is or includes at least one of Ti, Mg, V, Al, or a combination thereof. B2 may be or include a dopant doped into the second particle PTC2. For example, B2 may include Ti.

The second particle PTC2 may be or include a lithium-manganese-iron-phosphate (LMFP)-based positive electrode active material including at least a certain amount of Mn. The second particle PTC2 may have a relatively high operating voltage since the second particle PTC2 includes at least a certain amount of Mn. For example, the second

particle PTC2 may have an operating voltage of 3.5 V or higher. For example, the operating voltage of the second particle PTC2 may be 3.8 V or higher or 4.0 V or higher. When the second particle PTC2 having a relatively high operating voltage is blended with the third particle PTC3, which is a high-nickel-based positive electrode active material, the operating voltage and lifespan characteristics of the positive electrode may be improved.

In an example embodiment, the second particle PTC2 may include a second coating layer on a surface thereof. The second coating layer may cover the entire surface of the second particle PTC2, or may cover a part of the surface of the second particle PTC2. For example, the second coating layer may include carbon and/or a carbon-containing compound. The structural stability and the electrical conductivity of the second particle PTC2 may be improved by the second coating layer.

The second coating layer may further include at least one of a titanium-containing compound, a magnesium-containing compound, and a vanadium-containing compound. The metal-containing compound such as a titanium-containing compound, a magnesium-containing compound, and a vanadium-containing compound may be or include, for example, at least one of a metal oxide, a metal hydroxide, a metal carbonate, a composite thereof, or a mixture thereof. The metal-containing compound may further contain other metal or non-metal elements. For example, the metal-containing compound may further contain lithium.

Referring again to FIG. 8, the second particle PTC2 may have a polycrystalline form, similar to the first particle PTC1, and may include a secondary particle in which at least two second primary particles are aggregated (e.g., agglomerated). In other words, a second particle PTC2 may include a plurality of second primary particles aggregated (e.g., agglomerated). The second particle PTC2 may have a substantially spherical shape or a substantially elliptical shape.

In an example embodiment, the second particle PTC2 may further include a grain boundary coating layer on the surface of each of the second primary particles. The grain boundary coating layer may be present inside the second particle PTC2. The grain boundary coating layer may be formed by coating along the boundaries between the second primary particles inside the second particle PTC2. In other words, the grain boundary coating layer may refer to a material coated on the grain boundary inside the second particle PTC2. The grain boundary coating layer may include carbon and/or a carbon containing compound. The grain boundary coating layer may further include at least one of a titanium-containing compound, a magnesium-containing compound, and a vanadium-containing compound.

The inside of the second particle PTC2 described above may refer to the entire inside of the second particle PTC2 except for the surface of the second particle. For example, the inside of the second particle PTC2 may refer to an entire inner region starting from a depth of about 10 nm from the outer surface of the second particle PTC2 and extending inward. In another example, the inside of the second particle PTC2 may refer to a region ranging from a depth of about 10 nm to ≤ 2 μm from the outer surface of the second particle PTC2.

The second particle PTC2 may further include a grain boundary coating portion, whereby structural stability may be enhanced and a uniform coating layer may be formed on the surface of the second particle PTC2. In addition, the second particle PTC2 may further include the grain boundary coating portion, whereby the electrical conductivity of the second particle PCT2 may be further improved.

The second particle PTC2 may further include carbon derived from the second coating layer and/or the grain boundary coating layer described above. The elemental carbon amount in the second particle PTC2 may be from ≥ 0.5% by weight to ≤ 10% by weight, from ≥ 1% by weight to ≤ 3% by weight, or from ≥ 1.5% by weight to ≤ 2.5% by weight.

In the case where the second particle PTC2 is a secondary particle, the average particle diameter of the second particle PTC2 may be from ≥ 2 μm to ≤ 15 μm, from ≥ 3 μm to ≤ 10 μm, or from ≥ 3 μm to ≤ 7 μm. For example, the average particle diameter of the second particle PTC2 may be equal to ≤ 5 μm. In an example embodiment, the average particle diameter may be measured by a particle size analyzer. The average particle diameter may refer to the diameter (D50) of particles at which the cumulative volume in the particle size distribution reaches about 50% by volume.

The average size of the second primary particles of the second particle PTC2 may be from ≥ 10 nm to ≤ 400 nm, from ≥ 20 nm to ≤ 300 nm, from ≥ 30 nm to ≤ 200 nm, or from ≥ 50 nm to ≤ 150 nm. In an example embodiment, the average size of the second primary particles may refer to an average value of diameters measured by arbitrarily selecting about 30 second primary particles in an electron micrograph of the positive electrode active material. The particle diameters of the second primary particles may be uniform. The average size of the second primary particles of the second particle PTC2 may be smaller than the average size of the first primary particles of the first particle PTC1. The difference between the average size of the second primary particles and the average size of the first primary particles may be less than or equal to ≤ 100 nm.

When the average particle diameter of the second particle PTC2 and the average size of the second primary particles satisfy the range described above and the size of the second primary particles is uniform, the charge-discharge capacity and the low-temperature capacity of the rechargeable lithium battery including the same may be improved.

The second particle PTC2 may have a spherical shape in which nano-sized second primary particles are aggregated (e.g., agglomerated). The second particle PTC2 may exhibit the following characteristics as a result of the second primary particles being closely aggregated (e.g., agglomerated). The second particle PTC2 may have a

substantially spherical shape or an elliptical shape. The average particle diameter D50 of the second particle PTC2 may be from ≥ 2 μm to ≤ 15 μm. The porosity of the second particle PTC2 may be from ≥ 20% to ≤ 40%. The Span value obtained by analyzing the second particle PTC2 with a particle size analyzer may be from ≥ 0.3 to ≤ 0.75.

Although not illustrated, according to another example embodiment of the present disclosure, the second particle PTC2 may have a single particle form. The description of the single particles may be the same as, or similar to, the description above for the first particle PTC1.

When the second particle PTC2 has a single particle form, the second particle PTC2 may include at least one second primary particle. When the second particle PTC2 has a single particle form, the average particle diameter of the second particle PTC2 may be from ≥ 500 nm to ≤ 2.5 μm, or about 1 μm. The minimum particle diameter of the second particle PTC2, i.e., the size of the second primary particles, may be from ≥ 100 nm to ≤ 500 nm, or from ≥ 100 nm to ≤ 200 nm.

The third particle PTC3 may include a layered lithium compound represented by the following Chemical Formula 3.

Chemical Formula 3: $Li_{a3}Ni_{x3}Co_{y3}Ma_{z3}B3_{w3}O_{2-b3}$

In the Chemical Formula 3, where $0.8 \leq a3 \leq 1.2$, $0.8 \leq x3<1$, $0<y3 \leq 0.2$, $0<z3 \leq 0.2$ $0 \leq w3 \leq 0.1$, $0 \leq b3 \leq 0.05$, and $0.9 \leq x3+y3+z3+w3 \leq 1.1$, and Ma may be or include at least one of Al, Mn, or a combination thereof.

B3 may be or include at least one of Mg, Ti, V, Zr, Mo, Nb, or a combination thereof. B3 may be or include a dopant doped into the third particle PTC3. In the Chemical Formula 3, the case where w3 is equal to 0 may refer to a lithium nickel-based composite oxide that is not doped with B3.

Referring back to FIG. 8, the third particle PTC3 may have a polycrystalline form, similar to the first particle PTC1, and may include a secondary particle in which a plurality of third primary particles are aggregated (e.g., agglomerated). In an example embodiment, the third particle PTC3 may have a substantially spherical or substantially elliptical shape in which the third primary particles are aggregated (e.g., agglomerated). Alternatively, the third particle PTC3 may have a random shape even when the third primary particles are aggregated (e.g., agglomerated).

The positive electrode active material according to examples of the present disclosure includes the third particle PTC3 that is a nickel-based positive electrode active material, whereby high operating voltage, high capacity, and high energy density may be achieved. The working voltage of the third particle PTC3 may be 4.0 V or higher. For example, the operating voltage of the third particle PTC3 may be 4.1 V or higher, or 4.2 V or higher.

In an example embodiment, the third particle PTC3 may include a third coating layer on a surface thereof. The third particle PTC3 may include the third coating layer, whereby the structural collapse caused by repeated charging and discharging may be effectively reduced or suppressed. Thus, the lifespan characteristics of the secondary battery may be improved.

The third coating layer may include at least one of a boron-containing compound, an aluminum-containing compound, or a combination thereof. The metal-containing compound in the third coating layer may be or include, for example, at least one of a metal oxide, a metal hydroxide, a metal carbonate, a composite thereof, or a mixture thereof. The metal-containing compound may further contain other metal or non-metal elements. For example, the third coating layer may further include lithium, manganese, and/or nickel and the like.

The method for measuring the metal amount in the third coating layer of the third particle PTC3 may include performing scanning electron microscope-energy dispersive X-ray spectroscopy (SEM-EDS) on the third particle PCT3. This analysis allows to determine the amount of boron and/or aluminum in the third coating layer. As a method for measuring the metal amount in the third coating layer, in addition to SEM-EDS, inductively coupled plasma-mass spectrometry (ICP-MS), inductively coupled Plasma Optical Emission Spectroscopy (ICP-OES), or the like, may be used.

The average particle diameter of the third particle PTC3 may be from ≥ 8 μm to ≤ 20 μm, from ≥ 10 μm to ≤ 20 μm, or from ≥ 12 μm to ≤ 18 μm. The average particle diameter of the third particle PTC3 may be larger than the average particle diameters of the first particle PTC1 and of the second particle PTC2 described above. The size of the third primary particles of the third particle PTC3 may be larger than the size of the first primary particles of the first particle PTC1 and of the second primary particles of the second particle PTC2.

In an example embodiment, the average particle size may be determined by arbitrarily selecting about 30 third particles PTC3 in an electron micrograph of the positive electrode active material, measuring the particle size, and taking the diameter (D50) of particles at which the cumulative volume in the particle size distribution reaches about 50% by volume.

Although not illustrated, in another example embodiment of the present disclosure, the third particle PTC3 may have a single particle form. The description of the single particles may be the same as or similar to the description above for the first particle PTC1. In an example embodiment, the third particle PTC3 may be composed of or include one single particle (e.g., an isolated form alone). In an example embodiment, the third particle PTC3 may have a form in which a plurality of single particles are attached to each other.

In another example embodiment of the present disclosure, the third particle PTC3 may be in the form of a mixture of a compound in the form of secondary particles and a compound in the form of single particles.

The second binder BND2 may bind the second particle PTC2, the third particle PTC3, and the second conductive material CDM2 to each other. In addition, the second binder BND2 may stably fix the second positive electrode active material layer CAL2 on the first positive electrode active material layer CAL1. In an example embodiment, the second binder BND2 may include at least one of polyvinyl alcohol, carboxymethylcellulose, hydroxypropyl cellulose, diacetyl cellulose, polyvinyl chloride, carboxylated polyvinylchloride, polyvinyl fluoride, polymers including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth) acrylic resin, polyester resin and nylon, but is not limited to.

The second conductive material CDM2 may improve the conductivity of the second positive electrode active material layer CAL2. Any conductive material that does not cause an undesirable chemical change in the second positive electrode active material layer CAL2 may be used as the second conductive material CDM2 without limitation. In an example embodiment, the second conductive material CDM2 may include a carbon-based material such as natural graphite, artificial graphite, carbon black, acetylene black, Ketjen black, carbon fiber, carbon nanofiber, carbon nanotube, or the like; a metal-based material containing at least one of copper, nickel, aluminum, silver, or the like in the form of metal powder or metal fiber; a conductive polymer such as a polyphenylene derivative; or a mixture thereof.

Hereinafter, the positive electrode active material layer AML1 according to the example embodiments of the present disclosure is described in more detail with reference to FIG. 6 again.

**Positive Electrode Active Material Layer AML1**

The positive electrode active material layer AML1 may include a first positive electrode active material layer CAL1 and a second positive electrode active material layer CAL2 stacked on the first positive electrode active material layer CAL1.

The first positive electrode active material layer CAL1 may include a first particle PTC1 that is olivine-based positive electrode active material. The first particle PTC1 may be or include a lithium-iron-phosphate (LFP)-based positive electrode active material that does not contain Mn or contains only a trace amount of Mn at an impurity level. When the first positive electrode active material layer CAL1 adjacent to the positive electrode current collector COL1 includes a lithium-iron-phosphate (LFP)-based positive electrode active material having desired or improved thermal stability and lifespan characteristics, the thermal stability and lifespan of the entire positive electrode may be improved.

According to an example embodiment, the first positive electrode active material layer CAL1 may be substantially free of a high-nickel-based positive electrode active material. Compared with an olivine-based positive electrode active material, a high-nickel-based positive electrode active material undergoes a larger volume change during charging and discharging and exhibits lower high-temperature stability. Accordingly, when the high-nickel-based positive electrode active material is disposed in a region adjacent to the current collector, the lifespan and thermal stability of the electrode may be reduced. When the first positive electrode active material layer CAL1 does not include a high-nickel-based positive electrode active material, the thermal stability and lifespan characteristics of the positive electrode may be further improved.

The second positive electrode active material layer CAL2 may include a third particles PTC3, as illustrated in FIG. 8. The third particle PTC3 may include a high-nickel-based positive electrode active material, and thus may achieve a higher capacity than the first particle PTC1 and the second particle PTC2. When the second positive electrode active material layer CAL2 includes the third particle PTC3, the pellet density, the capacity, and the energy density may be improved.

In particular, the positive electrode 10 according to the example embodiments of the present disclosure may efficiently exhibit the high-capacity characteristics of the high-nickel-based positive electrode active material by including the third particle PTC3, which is or includes a high-nickel based positive electrode active material, in the second positive electrode active material layer CAL2 in which an electrochemical reaction actively occurs. For example, when the second positive electrode active material layer CAL2 includes a high-nickel-based positive electrode active material, the charge-discharge rate of the battery may be improved, and charge-discharge efficiency may be improved.

The second positive electrode active material layer CAL2 may include the second particle PTC2 that is lithium-manganese-iron-phosphate (LMFP)-based positive electrode active material together with the third particle PTC3 that is a high-nickel-based positive electrode active material, so that the stability and lifespan characteristics of the positive electrode 10 may be improved.

In the case of the lithium-iron-phosphate-based positive electrode active material, the operating voltage is about 3.5 V or less, which is a low operating voltage. On the other hand, a high-nickel-based positive electrode active material has a high operating voltage of from $\geq$ 3.5 V to $\leq$ 4.3 V. In the case where the positive electrode active material layer AML1 includes only the first particle PTC1 which is a lithium-iron-phosphate-based positive electrode active material, and the

third particle PTC3 which is a high-nickel-based positive electrode active material, at a high operating voltage of about 3.5 V or higher, the first particle PTC1 may be deactivated and all or most of the current density may be concentrated on the third particle PTC3, so that the deterioration of the third particle PCT3 may be accelerated. When the current density is concentrated on the third particle PTC3, the rate of intercalation/deintercalation of lithium ions may not keep up with the current flow, or the resistance may increase inside the third particle PTC3 and at the boundaries, resulting in an overvoltage. Overvoltage may increase the risk of thermal runaway.

The second particle PTC2 may include a lithium-manganese-iron-phosphate (LMFP)-based positive electrode active material. The lithium-manganese iron-phosphate-based positive electrode active material may have an operating voltage of about 3.4 V to ≤ 4.2 V. In the positive electrode 10 according to the example embodiments of the present disclosure, the second positive electrode active material layer CAL2 may include the second particle PTC2 that has a relatively high operating voltage together with the third particle PTC3 that is high-nickel-based positive electrode active material, so that the above-described problems of lifespan reduction and overvoltage generation may be improved.

For example, in the positive electrode 10 according to the example embodiments of the present disclosure, at a high operating voltage of about 3.5 V or higher, current is not concentrated solely on the third particle PTC3, but is instead dispersed to the third particle PCT3 and the second particle PTC2, so that the lifespan degradation and the overvoltage problem of the third particle PCT3 may be improved.

In the second positive electrode active material layer CAL2, a weight ratio of the second particle PTC2 to the third particle PTC3 may be in a range of about 1:1 to ≤ 1:3. In an example embodiment, the weight ratio of the second particle PTC2 to the third particle PTC3 may be about 1:2. When the weight ratio of the second particle PTC2 to the third particle PTC3 satisfies the above-described range, the second positive electrode active material layer may have desired or improved lifespan and desired or improved stability while having desired or improved capacity and energy density.

An amount of the third particle PTC3 relative to a total weight of the first, second and third particles PTC1, PTC2 and PTC3 may be from ≥ 10 wt% to ≤ 30 wt%. In an example embodiment, the amount of the third particle PTC3 relative to the total weight of the first, second and third particles PTC1, PTC2 and PTC3 may be about 20 wt%. When the amount of the third particle PTC3 satisfies the above-described range, the positive electrode 10 may have desired or improved lifespan and desired or improved stability while having desired or improved capacity and energy density.

According to example embodiments of the present disclosure, the loading level of the first positive electrode active material layer CAL1 may be from ≥ 10 $mg/cm^2$ to ≤ 25 $mg/cm^2$. A loading level of the second positive electrode active material layer CAL2 may be from ≥ 5 $mg/cm^2$ to ≤ 15 $mg/cm^2$.

The rechargeable lithium battery 100 including the positive electrode 10 of the present disclosure may have desired or improved lifespan and desired or improved stability while having desired or improved capacity and energy density.

In an example embodiment of the present disclosure, the boundary between the first positive electrode active material layer CAL1 and the second positive electrode active material layer CAL2 may be defined by the distribution of the third particle PTC3. For example, a cross section of the positive electrode active material layer AML1 of the battery may be analyzed with an electron microscope image such as an SEM, and a region where the third particle PTC3 are densely distributed may be defined as the second positive electrode active material layer CAL2. A region where the third particle PTC3 are not substantially distributed may be defined as the second positive electrode active material layer CAL1. Since the average particle diameter of the third particle PTC3 is about twice as large or more as the average particle diameter of the first and second particles PTC1 and PTC2, the third particle PCT3 may be clearly identified from the first and second particles PTC1 and PTC2.

Hereinafter, the present disclosure is described in more detail with reference to Examples. However, these examples are intended to illustrate the present disclosure, and the scope of the present disclosure is not limited to these examples.

## Preparation Example 1: Preparation of the First Particle in the Form of Secondary Particle

An iron phosphate precursor of $Fe_1PO_4$, lithium carbonate, and titanium dioxide were mixed in a molar ratio of Fe:Li:Ti=1:1.03:0.03. About 10 wt% of glucose was further added to the mixture. The slurry mixture was spray-dried at a spray pressure of about 0.5 MPa and a temperature of about 230° C to be evaporated until dry. The dried mixture was calcined at about 750° C for about 10 hours under a nitrogen atmosphere to obtain the first particle in the form of secondary particle. The average size of the primary particles in the first particle was about 100 nm to ≤ 200 nm.

## Preparation Example 2: Preparation of the Second Particle in the Form of Secondary Particle

A manganese iron phosphate precursor of $Mn_{0.6}Fe_{0.4}PO_4$, lithium carbonate, and titanium dioxide were mixed in a molar ratio of (Mn+Fe):Li:Ti=1:1.03:0.03. about 12 wt% of glucose was further added to the mixture. The slurry mixture was spray-dried at a spray pressure of about 0.5 MPa and a temperature of about 230° C to be evaporated until dry. The

dried mixture was calcined at about 750° C for 10 hours under a nitrogen atmosphere to obtain the second particle in the form of secondary particle. The average size of the primary particles in the second particle was about 50 nm to ≤ 150 nm.

## Preparation Example 3: Preparation of the Third Particle in the Form of Secondary Particle

A co-precipitation method was used to prepare a high-nickel-based precursor. For example, nickel sulfate ($NiSO_4 \cdot 6H_2O$), cobalt sulfate ($CoSO_4 \cdot 7H_2O$), and aluminum sulfate ($Al_2(SO_4)_3 \cdot 18H_2O$), as raw materials for the nickel-based metal hydroxide, were stirred in distilled water as a solvent for about 10 to ≤ 20 hours in a molar ratio of 88.5:10:1.5 to prepare a mixed metal raw material solution. The mixed metal raw material solution, ammonia water, and sodium hydroxide were charged into a reactor and reacted. The slurry solution in the reactor was filtered and washed with high purity distilled water. The washed material was dried in a hot air oven at about 210° C for about 24 hours to obtain a large particle (i.e., secondary particle) precursor ($Ni_{0.995}Co_{0.10}Al_{0.015}$ $(OH)_2$) powder having an average particle diameter of about 14 μm.

The high-nickel-based precursor and anhydrous lithium hydroxide (LiOH) were dry mixed using a Henschel mixer. Lithium and transition metal were mixed in a molar ratio of about 1:1. The transition metal is the sum of the transition metals contained in the high-nickel-based precursor (Ni+Co+Al). The mixture was further charged with a melting agent and subjected to heat treatment (i.e., a calcination process) in an oxygen atmosphere at about 750° C for about 15 hours to synthesize the third particle that was high-nickel-based positive electrode active material. The third particle was ground with a Jet mill at a pressure of about 3 bar.

The third particle was put into distilled water and washed. The boron and aluminum coating was carried out by adding boron oxide and aluminum oxide in an amount corresponding to ≤ 3 mol % based on the sum of the transition metals in the third particle. The third particle were dried at about 150° C for about 12 hours and subjected to a heat treatment (i.e., surface treatment) in an oxygen atmosphere at about 700° C for about 15 hours.

## Embodiment

First particles of Preparation Example 1 were prepared as a first positive electrode active material.

A first positive electrode active material, a first binder (polyvinylidene fluoride), and a first conductive material (carbon black) were dispersed in N-methyl pyrrolidone in a weight ratio of 95:3:2 to prepare a first active material slurry.

The second particles of Preparation Example 2 and the third particles of Preparation Example 3 were mixed in a weight ratio of 1:2 to prepare a second positive electrode active material.

A second positive electrode active material, a second binder (polyvinylidene fluoride), and a second conductive material (carbon black) were dispersed in N-methyl pyrrolidone in a weight ratio of 95:3:2 to prepare a second active material slurry.

The first active material slurry was applied to an aluminum (Al) thin film having a thickness of about 15 μm, which served as a positive electrode current collector, and then dried to form a first positive electrode active material layer. The second active material slurry was applied onto the first positive electrode active material layer and then dried to form a second positive electrode active material layer. At this time, the first and second positive electrode active material layers were formed so that an amount of the third particle relative to a total weight of the first, second and third particles was about 20 wt%. In other words, the amount of the third particle relative to the total weight of the positive electrode active material included in the entire positive electrode active material layer (i.e., the first and second positive electrode active material layers) was about 20 wt%. Subsequently, roll pressing was performed to prepare a positive electrode in which the aluminum current collector; the first positive electrode active material layer; and the second positive electrode active material layer were stacked in this order.

## Comparative Example 1

The first particles of Preparation Example 1, the second particles of Preparation Example 2, and the third particles of Preparation Example 3 were mixed in a weight ratio of 70:10:20 to prepare a positive electrode active material.

The positive electrode active material, a binder (polyvinylidene fluoride), and a conductive material (carbon black) were dispersed in N-methyl pyrrolidone in a weight ratio of 95:3:2 to prepare a positive electrode active material slurry.

The positive electrode active material slurry was applied to an aluminum (Al) thin film having a thickness of about 15 μm, which constituted a positive electrode current collector, and then dried to form a positive electrode active material layer. Subsequently, roll pressing was performed to prepare a positive electrode in which the positive electrode active material layer was stacked on an aluminum current collector.

## Comparative Example 2

The second particles of Preparation Example 2 and the third particles of Preparation Example 3 were mixed in a weight ratio of 1:2 to prepare a first positive electrode active material.

A first positive electrode active material, a first binder (polyvinylidene fluoride), and a first conductive material (carbon black) were dispersed in N-methyl pyrrolidone in a weight ratio of 95:3:2 to prepare a first active material slurry.

First particles of Preparation Example 1 were prepared as a second positive electrode active material.

A second positive electrode active material, a second binder (polyvinylidene fluoride), and a second conductive material (carbon black) were dispersed in N-methyl pyrrolidone in a weight ratio of 95:3:2 to prepare a second active material slurry.

The first active material slurry was applied to an aluminum (Al) thin film having a thickness of about 15 μm, which served as a positive electrode current collector, and then dried to form a first positive electrode active material layer. The second active material slurry was applied onto the first positive electrode active material layer, and then dried to form a second positive electrode active material layer. At this time, the first and second positive electrode active material layers were formed so that an amount of the third particle relative to a total weight of the first, second and third particles was about 20 wt%. Subsequently, roll pressing was performed to prepare a positive electrode in which the aluminum current collector; the first positive electrode active material layer; and the second positive electrode active material layer were stacked in this order.

Table 1 below is a table showing the compositions of the positive electrodes of Example and Comparative Examples described above.

Table 1:

| Classification | Composition | | Structure of Positive Electrode Active Material Layer |
|---|---|---|---|
| | First positive electrode active material layer | Second positive electrode active material layer | |
| Example | First Particle 70 wt% | Second particle 10 wt%<br>Third particle 20 wt% | Double layer |
| Comparative Example 1 | First particle 70 wt%, Second particle 10 wt%, Third particle 20wt% | | Single layer |
| Comparative Example 2 | Second particle 10 wt%<br>Third particle 20 wt% | First Particle 70 wt% | Double layer |

## Preparation of Rechargeable lithium battery

A 2032 type coin half-cell was prepared using the prepared positive electrode and a lithium metal counter electrode as a counter electrode. A separator made of a porous polyethylene (PE) film (thickness: about 16 μm) was interposed between the positive electrode and the lithium metal counter electrode, and an electrolytic solution was injected to produce a rechargeable lithium battery. As the electrolyte, an electrolytic solution obtained by mixing 1.3 M $LiPF_6$ with a mixed solvent containing ethylene carbonate (EC), ethyl methyl carbonate (EMC), and dimethylene carbonate (DMC) in a volume ratio of 3:4:3 was used.

## Evaluation Example: Evaluation of Battery Characteristics

The rechargeable lithium batteries prepared according to Example and Comparative Examples were evaluated for initial efficiency, lifespan, and rate characteristics by the following methods.

### (1) Evaluation of Initial Efficiency and Average Voltage

The lithium batteries prepared in the example and comparative examples were subjected to constant current charging at about 25° C with a current of about 0.2 C rate until the voltage reached about 4.25 V (vs. Li), and then cut-off at a current of about 0.05 C rate while maintaining about 4.25 V in a constant voltage mode. Subsequently, the lithium batteries were discharged at a constant current of about 0.2 C rate until the voltage reached about 2.5 V (vs. Li) at the time of discharge (formation cycle). The charge-discharge capacity, efficiency, and average voltage in the formation cycle are shown in Table 2 below.

### (2) Evaluation of Lifespan Characteristics

The lithium battery after the formation cycle was subjected to constant current charging at about 45° C with a current of about 0.5 C rate until the voltage reached about 4.25 V (vs. Li). Subsequently, the lithium battery was discharged at a constant current of about 0.5 C rate until the voltage reached about 2.5 V (vs. Li) at the time of discharge, and this cycle was repeated under the same conditions up to the 50th cycle (50 repetitions). In all charge/discharge cycles, a stop time of about 10 minutes was set after each charge/discharge cycle. The capacity retention after 50 repetitions is shown in Table 2 below. The capacity retention is defined by the following Formula 1 below.

Formula 1: capacity retention [%] = [discharge capacity at 50th cycle/discharge capacity at 1st cycle] $\times$ 100 Formula 1:

### (3) Evaluation of Rate Characteristics

The lithium battery after the formation cycle was subjected to constant current charging at about 25° C with a current of about 0.2 C rate until the voltage reached about 4.25 V (vs. Li).Subsequently, the battery was discharged at a constant current of about 1 C rate until the voltage reached about 2.5 V (vs. Li) at the time of discharge. The ratio of the discharge capacity at 1 C rate to the discharge capacity at 0.2 C rate was defined as the rate characteristics, and the results are shown in Table 2 below. The rate characteristics may be calculated according to Formula 2 below.

Rate characteristics [%] = [discharge capacity at 1 C rate/discharge capacity at 0.2 C rate] $\times$ 100. Formula 2:

Table 2

| | Formation cycle | | | | Lifespan Characteristics | Rate Characteristics |
|---|---|---|---|---|---|---|
| Classification | Charge amount at 4.25 V (mAh/g) | Discharge amount at 4.25 V (mAh/g) | Efficiency at 4.25 V (%) | Average Voltage (V) | Lifespan at 4.25 V (%, 50cyc) | (%, 1C/0.2C) |
| Example | 174.8 | 166.1 | 95.0 | 3.33 | 99.5 | 94.1 |
| Comparative Example 1 | 177 | 164.3 | 92.8 | 3.28 | 97.9 | 90.1 |
| Comparative Example 2 | 172.1 | 160.4 | 93.2 | 3.33 | 98.1 | 89.5 |

Referring to Table 2, it may be seen that the rechargeable lithium battery according to the example has desired or improved initial efficiency, lifespan, and energy density when compared with the rechargeable lithium battery of the comparative example.

The positive electrode for a rechargeable lithium battery according to the present disclosure may have desired or improved capacity, desired or improved rate characteristics, and desired or improved lifespan characteristics.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

### Claims

**1.** A positive electrode (10) for a rechargeable lithium battery (100), the positive electrode (10) comprising:

a positive electrode current collector;
a first positive electrode active material layer on the positive electrode current collector; and
a second positive electrode active material layer on the first positive electrode active material layer;

wherein the first positive electrode active material layer comprises first particles comprising a material represented by the following Chemical Formula 1,
wherein the second positive electrode active material layer comprises second particles comprising a material represented by the following Chemical Formula 2, and third particles comprising a material represented by the following Chemical Formula 3, and
wherein an amount of the third particles relative to a total weight of the first, second and third particles is from ≥ 10 wt% to ≤ 30 wt%,

Chemical Formula 1: $Li_{a1}Mn_{z1}Fe_{x1}B1_{y1}PO_{4-b1}$

wherein $0.8 \le a1 \le 1.2$, $0 \le z1 \le 0.9$, $0.1 \le x1 \le 1$, $0 \le y1 \le 0.05$, $0 \le b1 \le 0.05$, and $x1 + y1 + z1 = 1$,
wherein B1 comprises at least one of Ti, Mg, V, Al, and a combination thereof,

Chemical Formula 2: $Li_{a2}Mn_{z2}Fe_{x2}B2_{y2}PO_{4-b2}$

wherein $0.8 \le a2 \le 1.2$, $0.5 \le z2 \le 0.9$, $0.1 \le x2 \le 0.5$, $0 \le y2 \le 0.05$, $0 \le b2 \le 0.05$, and $x2+y2+z2=1$,
wherein B2 comprises at least one of Ti, Mg, V, Al, and a combination thereof,

Chemical Formula 3: $Li_{a3}Ni_{x3}Co_{y3}Ma_{z3}B3_{w3}O_{2-b3}$

In the Chemical Formula 3, $0.8 \le a3 \le 1.2$, $0.8 \le x3<1$, $0<y3 \le 0.2$, $0<z3 \le 0.2$, $0 \le w3 \le 0.1$, $0 \le b3 \le 0.05$, and $0.9 \le x3+y3+z3+w3 \le 1.1$, and
wherein Ma comprises at least one of Al, Mn, and a combination thereof, and B3 comprises at least one of Mg, Ti, V, Zr, Mo, Nb, and a combination thereof.

**2.** The positive electrode (10) as claimed in claim 1,

wherein z1 is from ≥ 0 to ≤ 0.1, and
wherein x1 is from ≥ 0.9 to ≤ 1.

**3.** The positive electrode (10) as claimed in claim 1 or 2,

wherein the first particle is a spherical secondary particle in which a plurality of first primary particles are aggregated,
wherein an average size of the plurality of first primary particles is from ≥ 100 nm to ≤ 200 nm, and
wherein an average particle diameter (D50) of the first particle is from ≥ 3 μm to ≤ 7 μm.

**4.** The positive electrode (10) as claimed in any of the claims 1 to 3,

wherein the second particle is a spherical secondary particle in which a plurality of second primary particles are aggregated,
wherein an average size of the plurality of second primary particles is from ≥ 50 nm to ≤ 150 nm, and
wherein an average particle diameter (D50) of the second particle is from ≥ 3 μm to ≤ 7 μm.

**5.** The positive electrode (10) as claimed in any of the claims 1 to 4, wherein each of the first particles and second particles comprises a coating layer including carbon.

**6.** The positive electrode (10) as claimed in any of the claims 1 to 5, wherein the third particles comprise a coating layer including at least one of a boron-containing compound, an aluminum-containing compound, and a combination thereof.

**7.** The positive electrode (10) as claimed in any of the claims 1 to 6, wherein, in the second positive electrode active material layer, a weight ratio of the second particle to the third particle is from ≥ 1: 1 to ≤ 1:3.

**8.** The positive electrode (10) as claimed in any of the claims 1 to 7,

wherein the first positive electrode active material layer further comprises a first binder and a first conductive material, and

wherein the second positive electrode active material layer further comprises a second binder and a second conductive material.

**9.** A positive electrode (10) for a rechargeable lithium battery (100), the positive electrode comprising:

a positive electrode current collector;
a first positive electrode active material layer on the positive electrode current collector; and
a second positive electrode active material layer on the first positive electrode active material layer;
wherein the first positive electrode active material layer comprises first particles comprising a material represented by the following Chemical Formula 1,
wherein the second positive electrode active material layer comprises second particles comprising a material represented by the following Chemical Formula 2, and third particles comprising a material represented by the following Chemical Formula 3,
wherein the first positive electrode active material layer is substantially free of the third particles, and
wherein, in the second positive electrode active material layer, a weight ratio of the second particle to the third particle is from ≥ 1:1 to ≤ 1:3,

Chemical Formula 1: $Li_{a1}Mn_{z1}Fe_{x1}BI_{y1}PO_{4-b1}$

**wherein** $0.8 \leq a1 \leq 1.2$, $0 \leq z1 \leq 0.9$, $0.1 \leq x1 \leq 1$, $0 \leq y1 \leq 0.05$, $0 \leq b1 \leq 0.05$, and $x1+y1+z1=1$,
wherein B1 comprises at least one of Ti, Mg, V, Al, and a combination thereof,

Chemical Formula 2: $Li_{a2}Mn_{z2}Fe_{x2}B2_{y2}PO_{4-b2}$

wherein $0.8 \leq a2 \leq 1.2$, $0.5 \leq z2 \leq 0.9$, $0.1 \leq x2 \leq 0.5$, $0 \leq y2 \leq 0.05$, $0 \leq b2 \leq 0.05$, and $x2+y2+z2=1$,
wherein B2 comprises at least one of Ti, Mg, V, Al, and a combination thereof,

Chemical Formula 3: $Li_{a3}Ni_{x3}CO_{y3}Ma_{z3}B3_{w3}O_{2-b3}$

In the Chemical Formula 3, $0.8 \leq a3 \leq 1.2$, $0.8 \leq x3 < 1$, $0 < y3 \leq 0.2$, $0 < z3 \leq 0.2$, $0 \leq w3 \leq 0.1$, $0 \leq b3 \leq 0.05$, and $0.9 \leq x3+y3+z3+w3 \leq 1.1$, and
wherein Ma comprises at least one of Al, Mn, and a combination thereof, and B3 comprises at least one of Mg, Ti, V, Zr, Mo, Nb, and a combination thereof.

**10.** The positive electrode (10) as claimed in claim 9,

wherein z1 is from ≥ 0 to ≤ 0.1, and
wherein x1 is from ≥ 0.9 to ≤ 1.

**11.** The positive electrode (10) as claimed in claim 9 or 10, wherein an amount of the third particles relative to a total weight of the first, second and third particles is from ≥ 10 wt% to ≤ 30 wt%.

**12.** A rechargeable lithium battery (100) comprising:

a positive electrode (10) as claimed in any of the claims 1 to 11;
a negative electrode (20); and
an electrolyte between the positive electrode (10) and the negative electrode (20).

FIG. 1

ELL
Li+
COL1 AML1
10
30
COL2 AML2
20

FIG. 2

100
60
30
40
30
10
20
50

FIG. 3

100
11
12
10
40
30
20
22
21
50

FIG. 4

100
50
72
40
71
10
30
20

FIG. 5

100
50
40
10
30
20
70

FIG. 6
10
THK2
THK1
CAL2
CAL1
AML1
COL1
D3
D1
FIG. 7
CAL1
PTC1
BND1
CDM1
D2
D1

# FIG. 8

CAL2
PTC2
BND2
PTC3
CDM2
D2
D1

Europäisches
Patentamt
European
Patent Office
Office européen
des brevets

# EUROPEAN SEARCH REPORT

Application Number
EP 26 15 3271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2024/239157 A1 (CONTEMPORARY AMPEREX TECHNOLOGY CO LTD [CN]) 28 November 2024 (2024-11-28)<br>* Comparative Example 1 *<br>* paragraphs [0086], [0121], [0136], [0159], [0170] - [0175], [0185], [0211]; examples 2,7 * | 1,2,7-12<br><br><br>1,3-7,9,11 | INV.<br>H01M4/36<br>H01M4/505<br>H01M4/525<br>H01M4/58<br>H01M10/052 |
| Y | US 2024/322173 A1 (MICHOT CHRISTOPHE [FR]) 26 September 2024 (2024-09-26)<br>* paragraphs [0232] - [0233], [0351], [0352], [0408], [0416], [0425], [0444]; example 3; table 13 * | 3-6 | |
| A | CN 119 029 353 A (ZHUHAI COSMX BATTERY CO LTD) 26 November 2024 (2024-11-26)<br>* paragraph [0134] * | 5,6 | |
| Y | US 2007/015058 A1 (TAKEZAWA HIDEHARU [JP] ET AL) 18 January 2007 (2007-01-18)<br>* paragraphs [0033], [0043], [0047], [0066] - [0069], [0080], [0086], [0095], [0105], [0127] *<br>* claims 1,7 * | 1,7,9,11 | TECHNICAL FIELDS SEARCHED (IPC)<br>H01M |

The present search report has been drawn up for all claims

| Place of search | Date of completion of the search | Examiner |
|---|---|---|
| The Hague | 9 March 2026 | Standaert, Frans |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 26 15 3271

This annex lists the patent family members relating to the patent documents cited in the above-mentioned European search report. The members are as contained in the European Patent Office EDP file on The European Patent Office is in no way liable for these particulars which are merely given for the purpose of information.

09-03-2026

| Patent document cited in search report | Publication date | Patent family member(s) | Publication date |
|---|---|---|---|
| WO 2024239157 A1 | 28-11-2024 | CN 119998956 A | 13-05-2025 |
| | | WO 2024239157 A1 | 28-11-2024 |
| US 2024322173 A1 | 26-09-2024 | CA 3073706 A1 | 26-08-2020 |
| | | CA 3073708 A1 | 09-07-2020 |
| | | US 12040487 B1 | 16-07-2024 |
| | | US 2020274161 A1 | 27-08-2020 |
| | | US 2024322173 A1 | 26-09-2024 |
| CN 119029353 A | 26-11-2024 | NONE | |
| US 2007015058 A1 | 18-01-2007 | CN 1897331 A | 17-01-2007 |
| | | KR 20070009447 A | 18-01-2007 |
| | | US 2007015058 A1 | 18-01-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020250015184